Europäisches Patentamt

European Patent Office

Office européen des brevets

(11) Numéro de publication: **0 359 688**
**A1**

(12) **DEMANDE DE BREVET EUROPEEN**

(21) Numéro de dépôt: 89460026.1

(22) Date de dépôt: 13.09.89

(51) Int. Cl.⁵: **F 16 L 11/12**

(30) Priorité: 16.09.88 FR 8812410

(43) Date de publication de la demande:
21.03.90 Bulletin 90/12

(84) Etats contractants désignés:
CH DE ES FR GB IT LI SE

(71) Demandeur: LEGRIS SA
74 rue de Paris
F-35014 Rennes (FR)

(72) Inventeur: Levenez, Yves
57 rue de la Baste
F-77000 Vaux le Penil (FR)

(74) Mandataire: Dubreuil, Annie
Cabinet DUBREUIL Le Suffren 17 D rue des Peupliers
F-56100 Lorient (FR)

(54) **Tuyauterie spiralée perfectionnée.**

(57) Tuyauterie spiralée perfectionnée pour tous fluides.
Les spires de cette tuyauterie (1) présentent la configuration
géomètrique de deux droites réunissant deux demi-circonférences par leurs extrèmités.La tuyauterie de longueur voulue
est prélevée dans la longueur de tuyau spiralé par coupure à la
jonction d'une portion courbe avec une portion rectiligne;celle-
ci constituant à chacune de ses extrèmités un embout
parfaitement cylindrique apte à s'engager dans un raccord (4)
et garantir l'étanchéité du branchement.

Fig 1

EP 0 359 688 A1

## Description

### Tuyauterie spiralée perfectionnée

Les tuyauteries spiralées extensibles permettant de conduire les fluides à des appareils mobiles par rapport à leurs raccordements fixes,sont couramment utilisées dans l'industrie.Ces tuyauteries, généralement en matière plastique,présentent une succession de spires de forme circulaire,sensiblement jointives au repos,qui leur donnent une possibilité d'extension de même nature que celle des ressorts métalliques du type traction dont elles ont l'aspect. Proposées sous forme d'éléments standardisés de longueurs prédéterminées,les tuyauteries spiralées se terminent à chaque bout par une portion droite de tuyau pour la réalisation d'un raccordement parfaitement étanche;cette solution offre l'inconvénient d'un choix nécessairement réduit de longueurs disponibles.La tuyauterie spiralée est également proposée au mètrage de grande longueur à l'utilisateur qui en prélève la longueur adéquate à son application ;mais dans ce cas,les extrémités de cette tuyauterie présentent non seulement la courbure des spires qui rend malaisé ou interdit leur introduction dans les raccords,notamment les raccords du type instantané,mais également une section aplatie de forme ovale du tuyau incompatible avec les moyens d'étanchéité des raccords prévus pour des sections circulaires.

Le but de la présente invention est de conserver l'avantage de la tuyauterie spiralée proposée en grande longueur dans laquelle l'utilisateur prélèvera par coupure la longueur exacte convenant à son besoin,mais qui présentera néanmoins à chaque extrèmité une portion de tuyau correctement cylindrique permettant un raccordement étanche.

Selon l'invention,chaque spire de la tuyauterie spiralée est mise en forme de manière à comporter au moins une portion rectiligne de tuyau de longueur suffisante pour être engagée dans le guidage d'entrée d'un raccord et dont la section est en tout point circulaire.

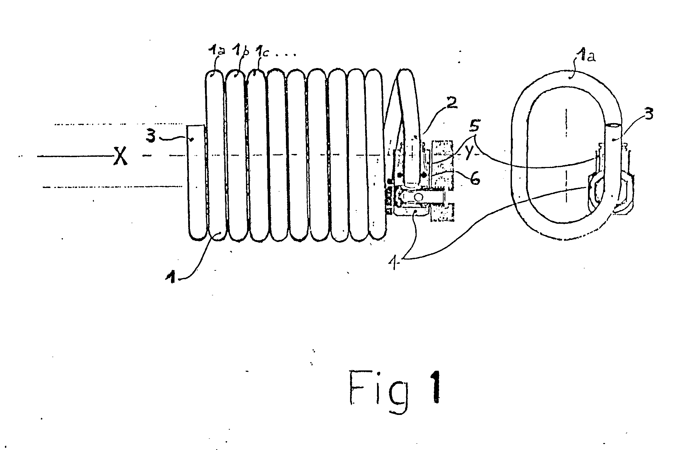

La Figure I montre ,à titre d'exemple ,une réalisation selon un mode préférentiel de l'invention.

Suivant la Figure I,la tuyauterie spiralée extensible perfectionnée présente des spires successives la,lb,lc...,sensiblement jointives au repos,dont la configuration géométrique,transversalement à l'axe XY d'extension,est oblongue et constituée de deux droites réunissant les extrèmités de deux demi-cercles;la tuyauterie spiralée peut ainsi etre avantageusement coupée à l'une quelconque des jonctions entre les parties courbes et les parties rectilignes du tuyau.Si dans les parties courbes le tuyau peut présenter une certaine deformation de sa section non préjudiciable au passage du fluide,il est aisé de lui conserver par contre sa section circulaire d'origine dans les portions rectilignes.La tuyauterie spiralée perfectionnéedont la longueur peut ainsi être ajustée au besoin à une demi-spire près,offre à chaque extrèmité 2,3,une longueur de tuyau suffisante parfaitement cylindrique apte à s'engager dans le guidage d'entrée 5 d'un raccord 4 et dans son joint torique 6 garantissant l'étanchéité du raccordement.

Suivant d'autres modes de réalisation de l'invention,les spires de la tuyauterie spiralée présentent une configuration polygonale aux angles arrondis.

### Revendications

I— Tuyauterie spiralée extensible perfectionnée pour fluide liqmide ou gazeux,caractèrisée ence qu'elle est constituée de spires dont la configuration géomètrique transversale à l'axe(XY) d'extension comporte au moins une portion(2)rectiligne et que dans ladite portion(2) la section circulaire du tuyau est conservée.

2- Tuyauterie spiralée perfectionnée selon la revendication I, caractèrisée en ce que chacune des spires présente transversalement à l'axe (XY) d'extension,une configuration géomètrique oblongue for mée de deux droites réunissant deux demi-circonférences par leurs extrèmités.

3- Tuyauterie spiralée perfectionnée selon la revendication I, caractèrisée en ce que la configuration géomètrique des spires est polygonale.

Fig 1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | DE-A-2700863 (PARKER-HANNIFIN CORP.) <br> * page 5, lignes 1 - 9; figure 1 * <br> --- | 1 | F16L11/12 |
| A | US-A-3211473 (W.SCHMID) <br> * revendication 1; figure 2 * <br> --- | 1 | |
| A | US-A-3487858 (F.J.HANBACK) <br> ------ | | |

DOMAINES TECHNIQUES
RECHERCHES (Int. Cl.5 )

F16L

Le présent rapport a été établi pour toutes les revendications

| Lieu de la recherche | Date d'achèvement de la recherche | Examinateur |
|---|---|---|
| BERLIN | 18 DECEMBRE 1989 | SCHAEFFLER C.A.A. |